(19) Europäisches Patentamt / European Patent Office / Office européen des brevets

(11) **EP 4 507 417 A1**

(12) **EUROPEAN PATENT APPLICATION**
published in accordance with Art. 153(4) EPC

(43) Date of publication:
**12.02.2025 Bulletin 2025/07**

(21) Application number: **23784071.5**

(22) Date of filing: **12.01.2023**

(51) International Patent Classification (IPC):
***H04W 68/00*** (2009.01)

(52) Cooperative Patent Classification (CPC):
**H04W 68/00; H04W 68/02; H04W 76/28;**
**Y02D 30/70**

(86) International application number:
**PCT/CN2023/071978**

(87) International publication number:
**WO 2023/193507 (12.10.2023 Gazette 2023/41)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **08.04.2022 CN 202210366655**

(71) Applicant: ZTE Corporation
**Shenzhen, Guangdong 518057 (CN)**

(72) Inventors:
 • **YANG, Weiwei**
  **Shenzhen, Guangdong 518057 (CN)**

 • **DAI, Bo**
  **Shenzhen, Guangdong 518057 (CN)**
 • **CHEN, Mengzhu**
  **Shenzhen, Guangdong 518057 (CN)**
 • **LIU, Kun**
  **Shenzhen, Guangdong 518057 (CN)**
 • **HU, Youjun**
  **Shenzhen, Guangdong 518057 (CN)**

(74) Representative: **Savi, Massimiliano et al**
**Notarbartolo & Gervasi S.p.A.**
**Viale Achille Papa, 30**
**20149 Milano (IT)**

(54) **PAGING OCCASION DETERMINATION METHOD, TERMINAL, BASE STATION, STORAGE MEDIUM, AND PROGRAM PRODUCT**

(57) Embodiments of the present application provide a paging occasion determination method, comprising: receiving a wake-up signal sent by a base station; determining a target paging occasion at least according to the wake-up signal; and detecting a physical downlink control channel at the target paging occasion. According to the paging occasion determination method provided by the embodiments of the present application, an appropriate paging occasion can be selected according to the wake-up signal to detect the physical downlink control channel.

FIG. 3

**Description**

**CROSS-REFERENCE TO RELATED APPLICATION**

This application is filed on the basis of Chinese patent application No. 202210366655.5 filed April 8, 2022, and claims priority to the Chinese patent application, the entire contents of which are incorporated herein by reference.

**TECHNICAL FIELD**

Embodiments of the present disclosure relate to the technical field of computers, and in particular to a Paging Occasion (PO) determination method, a terminal device, a base station, a storage medium, and a program product.

**BACKGROUND**

A network device may send a paging message to a terminal device (e.g., User Equipment, UE) in an idle state or a connected state. The UE detects a corresponding Physical Downlink Control Channel (PDCCH) at a Paging Occasion (PO) to determine whether a Physical Downlink Shared Channel (PDSCH) indicated by the PDCCH carries a paging message. If the UE does not detect the corresponding PDCCH at the PO, it indicates that no paging message is present at the PO. In this case, the UE enters a sleep state and does not receive data. When a subsequent PO arrives, the UE performs the detection again. In order to further reduce the power consumption of the UE, a Wake Up Signal (WUS) is introduced. After the UE is woken up by a low-power WUS, the UE cannot decode the PDCCH until a PO assigned to the UE is arrived, leading to a certain degree of paging delay.

**SUMMARY**

Provided are a method for determining a Paging Occasion (PO), a User Equipment (UE), a base station (BS), a computer-readable storage medium, and a computer program product in some embodiments of the present disclosure, to reduce the paging delay.

In accordance with a first aspect of the present disclosure, an embodiment provides a method for determining a PO. The method includes: receiving a WUS sent by a base station; determining a target PO according to at least the WUS; and detecting a PDCCH at the target PO.

In accordance with a second aspect of the present disclosure, an embodiment provides another method for determining a PO. The method includes: sending a WUS; determining a target PO according to at least the WUS; and sending a PDCCH at the target PO.

In accordance with a third aspect of the present disclosure, an embodiment provides a UE, including: a WUS receiving module, configured for receiving a WUS sent by a base station; a target PO determining module, configured for determining a target PO according to at least the WUS; and a channel detection module, configured for detecting a PDCCH at the target PO.

In accordance with a fourth aspect of the present disclosure, an embodiment provides a base station, including: a WUS sending module, configured for sending a WUS to a UE; a target PO determining module, configured for determining a target PO according to at least the WUS; and a channel sending module, configured for sending a PDCCH at the target PO.

In accordance with a fifth aspect of the present disclosure, an embodiment provides a computer-readable storage medium, storing a computer-executable instruction which, when executed by a processor, causes the processor to implement the PO determination method in accordance with the first aspect or the second aspect.

In accordance with a sixth aspect of the present disclosure, an embodiment provides a computer program product, including a computer program or a computer instruction stored in a computer-readable storage medium which, when read from the computer-readable storage medium and executed by a processor of a computer device, causes the computer device to implement the PO determination method in accordance with the first aspect or the second aspect.

**BRIEF DESCRIPTION OF DRAWINGS**

FIG. 1 shows a wireless communication system applicable to embodiments of the present disclosure;

FIG. 2 is a schematic diagram of a method for determining a PO in the related art;

FIG. 3 is a flowchart of method for determining a PO according to an embodiment of the present disclosure;

FIG. 4 is a flowchart of a method for determining a target PO set according to an embodiment of the present disclosure;

FIG. 5 is a schematic diagram of a method for determining a PO according to an embodiment of the present disclosure;

FIG. 6 is a schematic diagram of a method for determining a PO according to an embodiment of the present disclosure;

FIG. 7 is a schematic diagram of a method for determining a PO according to an embodiment of the present disclosure;

FIG. 8 is a schematic diagram of a method for determining a PO according to an embodiment of the present disclosure;

FIG. 9 is a schematic diagram of a method for determining a PO according to an embodiment of the present disclosure;

FIG. 10 is a schematic diagram of a method for determining a PO according to an embodiment of the present disclosure;

FIG. 11 is a schematic diagram of a method for determining a PO according to an embodiment of the present disclosure;

FIG. 12 is a schematic diagram of determining the target PO according to PO index information according to an embodiment of the present disclosure;

FIG. 13 is a schematic diagram of detecting a PDCCH at the target PO according to an embodiment of the present disclosure;

FIG. 14 is a schematic diagram of detecting a PDCCH at the target PO according to an embodiment of the present disclosure;

FIG. 15 is a schematic diagram of detecting a PDCCH at the target PO according to an embodiment of the present disclosure;

FIG. 16 is a schematic structural diagram of a UE according to an embodiment of the present disclosure; and

FIG. 17 is a schematic structural diagram of a base station according to an embodiment of the present disclosure.

## DETAILED DESCRIPTION

To make the objects, technical schemes, and advantages of the present disclosure clear, the present disclosure is described in further detail in conjunction with accompanying drawings and examples. It should be understood that the specific embodiments described herein are merely used for illustrating the present disclosure, and are not intended to limit the present disclosure.

It is to be noted, although functional modules have been divided in the schematic diagrams of apparatuses and logical orders have been shown in the flowcharts, in some cases, the modules may be divided in a different manner, or the steps shown or described may be executed in an order different from the orders as shown in the flowcharts. The terms such as "first", "second" and the like in the description, the claims, and the accompanying drawings are used to distinguish similar objects, and are not necessarily used to describe a specific sequence or a precedence order.

In the description of the embodiments of the present disclosure, unless otherwise explicitly defined, the terms such as "configure", "install/mount" and "connect" should be understood in a broad sense, and those having ordinary skills in the art can reasonably determine the specific meanings of the above terms in the embodiments of the present disclosure based on the specific contents of the technical schemes. In the embodiments of the present disclosure, any embodiment or design described following the terms such as "in an embodiment," "in some embodiments," and "for example" is used to indicate examples, explanations, or illustrations, and should not be construed as being superior or advantageous over other embodiments or designs. The use of the terms such as "in an embodiment," "in some embodiments," and "for example" is intended to present the relevant concepts in a concrete manner.

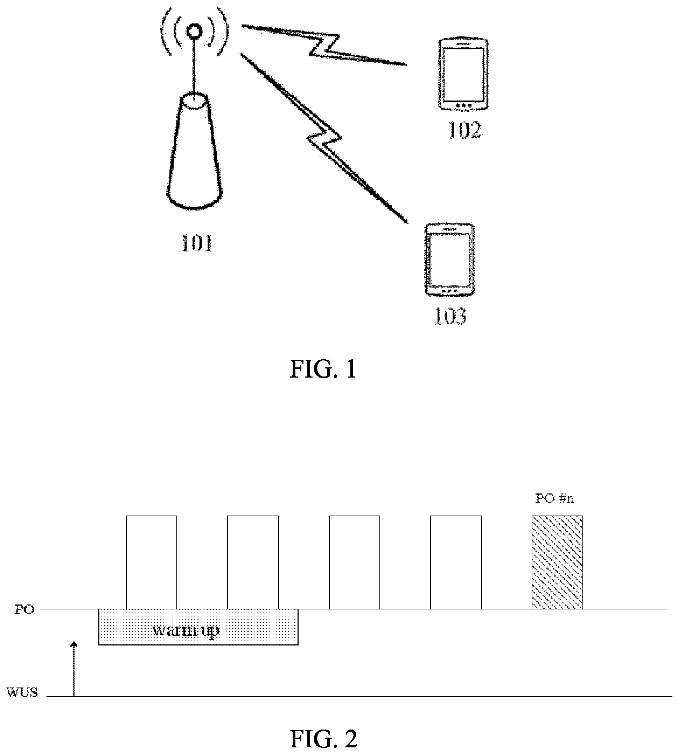

FIG. 1 shows a wireless communication system applicable to embodiments of the present disclosure. The wireless communication system may include at least one network device and one or more terminal devices. The network device (e.g., the network device 101 shown in FIG. 1) may be in wireless communicative connection with the one or more terminal devices (e.g., 102 and 103 shown in FIG. 1). The wireless communication system 100 may include, but not limited to, a Global System For Mobile Communications (GSM) system, a Code Division Multiple Access (CDMA) system, a Wideband Code Division Multiple Access (WCDMA) system, a General Packet Radio Service (GPRS), a Long Term Evolution (LTE) system, an LTE Frequency Division Duplex (FDD) system, an LTE Time Division Duplex (TDD) system, a Universal Mobile Telecommunication System (UMTS), a Worldwide Interoperability for Microwave Access (WiMAX) communication system, a future 5th Generation (5G) system, or a New Radio (NR) system.

The network device involved in an embodiment of the present disclosure may also be referred to as a base station device. The network device may be a NodeB in a UMTS network, an evolved NodeB (eNB or eNodeB) in an LTE network, a transmission reception point (TRP) in an NR network, or a next generation NodeB (gNB), but the present disclosure is not limited thereto.

The terminal device in the embodiments of the present disclosure may also be referred to as a user equipment (UE), which is a device having a communication function, and may include a handheld device having a wireless communication function, a vehicle-mounted device, a wearable device, a computing device, or other processing devices connected to a wireless modem, etc. The UE may have different names in different networks. For example, the UE may also be referred to as a mobile station, a subscriber unit, a station, a cellular telephone, a personal digital assistant, a wireless modem, a wireless communication device, a handheld device, a laptop, a cordless telephone, a wireless local loop (WLL) station, etc.

A network device may send a paging message to a UE in an idle state or a connected state. The paging process may be triggered by a core network to notify a UE to receive a paging request, or may be triggered by an eNB to notify the update of system information.

In order to reduce power consumption, the UE adopts the Discontinuous Reception (DRX) in the idle mode. Because the network may page the UE, the UE device needs to monitor paging when DRX is enabled. The UE may wake up at the corresponding PO to monitor paging Downlink Control Information (DCI) or monitor a PDCCH, and may sleep when DRX is not enabled, so as to reduce power consumption of the UE.

In order to further reduce the power consumption of the UE, a WUS is introduced. The base station sends, before each PO, a signal indicating whether to perform PDCCH detection. The UE first performs WUS detection, and determines according to a result of the WUS detection whether to detect a corresponding PDCCH. When a WUS is detected, the UE detects the PDCCH corresponding to the WUS; otherwise, the UE does not detect the PDCCH. The introduction of the WUS reduces the number of times the UE performs PDCCH detection, thus reducing the power consumption of the UE.

The UE monitors one PO per DRX cycle. One PO is a set of PDCCH monitor occasions (MOs), and may include a plurality of subframes or a plurality of Orthogonal Frequency Division Multiplexing (OFDM) symbols. The PDCCH MOs of one PO may span a plurality of radio frames. A paging frame (PF) is a radio frame. One PF may include one or more POs, or include a time-domain starting point(s) of one or more POs. The paging message is carried on a PDSCH in the form of a paging record. A specific process is as follows. The UE detects the PDCCH at an MO corresponding to the PO, decodes the corresponding PDSCH according to DCI carried on the PDCCH. If a paging record corresponding to the UE is detected on the PDSCH, the UE determines that it is paged, and performs subsequent operations.

An existing equation for a legacy PF is as follows:

$$(SFN+PF\_offset) \bmod T = (T \text{ div } N)*(UE\_ID \bmod N) \qquad \text{Equation 1.}$$

A frame whose frame number is determined according to equation 1 to be a system frame number (*SFN*) is the PF.

An existing equation for a legacy PO is as follows:

$$i\_s = floor(UE\_ID/N) \bmod Ns \qquad \text{Equation 2.}$$

*i_s* determined according to equation 2 represents an index of the PO, and the UE may determine the PO according to the *SFN* and *i_s*.

*PF-offset* represents an offset when the PF is determined, *T* represents a DRX cycle, *N* represents a number of PFs in a DRX cycle, and *Ns* represents a number of POs in a PF.

FIG. 2 is a schematic diagram of a conventional method for determining a PO in the related art based on the above equations for PO. As shown in FIG. 2, the POs are distributed in a DRX cycle, and the UE determines based on a UE-ID that a PO corresponding to the UE is PO#n. After the UE is woken up by a low-power WUS, the UE cannot decode the PDCCH to obtain a paging message until the PO#n corresponding to the UE, instead of the PO closest to the wakeup arrives, which leads to a certain paging delay and is not conducive to maintaining a longer battery life of the UE.

In view of this, according to a first aspect of the present disclosure, a method for determining a PO is provided in an embodiment, to select a more appropriate PO for PDCCH detection, thereby reducing the paging delay, prolonging the battery life of the UE, and improving the transmission efficiency of the communication network.

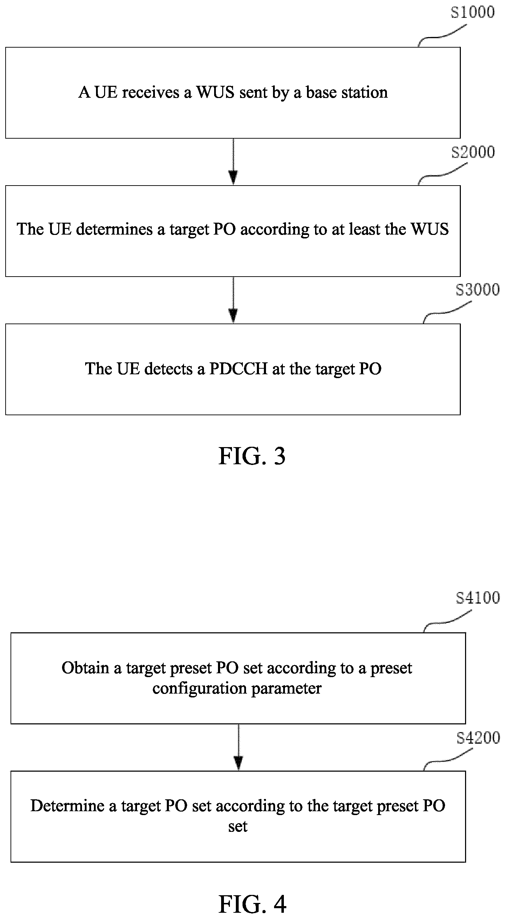

FIG. 3 is a flowchart of a method for determining a PO according to an embodiment of the present disclosure. The method includes at least the following operations S1000, S2000, and S3000.

At S1000, a UE receives a WUS sent by a base station.

In some embodiments, the WUS has corresponding first position information.

It should be noted that the first position information may include at least one of: a start position of a time domain unit where the WUS is located, an end position of a time domain unit where the WUS is located, a position of a first WUS among a plurality of WUSs corresponding to the WUS, a position of a last WUS among a plurality of WUSs corresponding to the WUS, a time domain resource position where the WUS carrying synchronization information is located, or a time domain resource position where the WUS for measurement is located. The time domain unit includes $H$ number of OFDM symbols, $K$ number of slots, and $M$ number of radio frames, where $H, K,$ and $M$ are positive integers. Those having ordinary skills in the art should understand that the first position information may include a combination of a plurality of the positions described above.

It should be noted that the first offset information may include at least one of: $k$ milliseconds, $m$ subframes, $b$ slots, $n$ radio frames, $h$ OFDM symbols, or $d$ POs, where $k, m, b, n, h,$ and $d$ are integers greater than or equal to 0. Those having ordinary skills in the art should understand that the first offset information may include a combination of a plurality of the offset units described above. In some embodiments, the first offset information includes first sub-offset information and second sub-offset information, and the first sub-offset information or the second sub-offset may include at least one of: $k1$ milliseconds, $m1$ subframes, $b1$ slots, $n1$ radio frames, $h1$ OFDM symbols, or $d1$ POs, where $k1, m1, b1, n1, h1,$ and $d1$ are integers greater than or equal to 0.

In some embodiments, the WUS carries PO index information.

At S2000, the UE determines the target PO according to the first position information and the first offset information corresponding to the WUS.

In some embodiments, the UE determines the target PO according to the first position information and the first offset information corresponding to the WUS.

At S2000, the UE determines the target PO according to the PO index information carried in the WUS.

In an embodiment, the UE obtains a target preset PO set according to a preset configuration parameter; and determines a target PO set according to the target preset PO set.

In an embodiment, the UE determines a start position of the target PO according to the first position information and the first offset information. The start position is one of, a starting symbol of the target PO, a starting slot of the target PO, or a radio frame in which the target PO is located.

At S3000, the UE detects a PDCCH at the target PO.

In an embodiment, the UE determines at least one PO closest to a second position in the target PO set as the target PO. The second position is obtained according to the first position information and the first offset information.

In an embodiment, the UE determines $L$ number of POs in the target PO set as the target POs. The value of $L$ is determined according to configuration signaling.

In an embodiment, the UE detects the PDCCH at a first PDCCH MO corresponding to the target PO.

In an embodiment, the UE detects the PDCCH at a last PDCCH MO corresponding to the target PO.

In an embodiment, the UE detects the PDCCH at a PDCCH MO corresponding to the target PO.

In an embodiment, the UE detects a PDCCH scrambled by a first Radio Network Temporary Identifier (RNTI) in a first search space set. It should be noted that the first RNTI is an RNTI dedicated to the PDCCH corresponding to the target PO, and the first search space set is a common search space set.

In an embodiment, the UE detects a PDCCH scrambled by a Paging Radio Network Temporary Identifier (P-RNTI) in a first search space set. It should be noted that a format of DCI carried in the PDCCH is a format dedicated to the PDCCH corresponding to the target PO, and a size of the DCI carried in the PDCCH is a size dedicated to the PDCCH corresponding to the target PO; and the first search space set is a common search space set.

In an embodiment, the UE detects a PDCCH scrambled by a second P-RNTI in a second search space set. It should be noted that the second P-RNTI is an RNTI dedicated to the PDCCH corresponding to the target PO, and the second search space set is a search space set dedicated to the PDCCH corresponding to the target PO.

In an embodiment, the UE detects the PDCCH falling within a frequency range of a first bandwidth part (BWP). It should be noted that the first BWP is a dedicated BWP carrying the PDCCH corresponding to the target PO.

In an embodiment, when a third RNTI is not configured in the base station, the UE determines a legacy PO as the target PO, where the third RNTI is an RNTI dedicated to the PDCCH corresponding to the target PO.

In an embodiment, when a second search space set is not configured in the base station, the UE determines a legacy PO as the target PO, where the second search space set is a search space set dedicated to the PDCCH corresponding to the target PO.

In an embodiment, when a BWP configured by the base station does not include a first BWP, the UE determines a legacy PO as the target PO, where the first BWP is a dedicated BWP carrying the PDCCH corresponding to the target PO.

In an embodiment, when a first DCI format and/or a first DCI size is not configured in the base station, a legacy PO is determined as the target PO, where the first DCI format is a format dedicated to the PDCCH corresponding to the target PO, and the first DCI size is a size dedicated to the PDCCH corresponding to the target PO.

In an embodiment, when signaling indicates that a legacy PO is the target PO, the UE determines the legacy PO as the target PO.

In an embodiment, the UE starts detection of legacy paging $F$ milliseconds after detecting that the WUS carries system message change indication information, where $F$ is a positive integer.

In an embodiment, the UE starts detection of legacy paging $J$ milliseconds after detecting that the PDCCH corresponding to the target PO carries system message change indication information, where $J$ is a positive integer.

FIG. 4 is a flowchart of a method for determining a target PO set according to an embodiment of the present disclosure, to further determined a PO in the determined target PO set. The method includes at least the following operations S4100 and S4200.

At S4100, a target preset PO set is obtained according to a preset configuration parameter.

It should be noted that the preset configuration parameter includes at least one of: a DRX cycle, a number of PFs in a DRX cycle, a number of POs in a PF, a PO-specific cycle, a PO-specific offset, or a number of POs.

At S4200, a target PO set is determined according to the target preset PO set.

In an embodiment, the target PO set is all of or part of the POs in the target preset PO set.

In an embodiment, the target PO set is a set including each $M2$ number of Pos out of every $M1$ number of Pos in the target preset PO set, where $M1$ and $M2$ are positive integers.

In an embodiment, the target PO set is a set including Pos in each $K2$ number of radio frames out of every $K1$ number of radio frames in the target preset PO set, where $K1$ and $K2$ are positive integers.

In an embodiment, the target PO set is a subset of the target preset PO set.

Illustration of the method for determining a PO determination are provided in greater details.

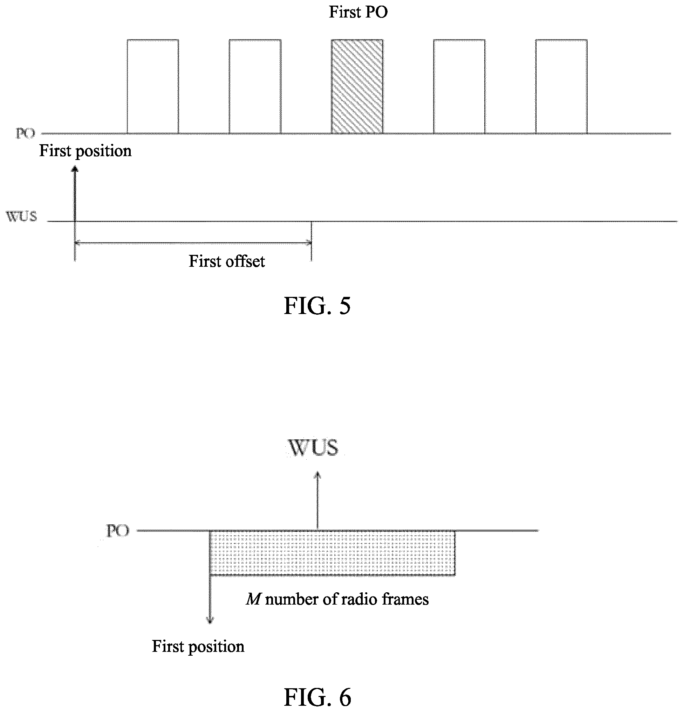

FIG. 5 is a schematic diagram of a method for determining a PO according to an embodiment of the present disclosure. FIG. 6 to FIG. 12 are schematic diagrams of a method for determining a PO according to some embodiments of the present disclosure.

In an embodiment, as shown in FIG. 5, a UE detects a WUS sent by a base station, determines a corresponding target PO according to at least a first position and a first offset corresponding to the WUS, and detects a PDCCH at the target PO.

The following embodiments describe several scenarios of the first position information in greater details.

In an embodiment, as shown in FIG. 6, assuming that a time domain unit where the WUS is located is $M$ number of radio frames, the UE detects the WUS sent by the base station, and determines a corresponding first PO according to at least a first position and a first offset corresponding to the WUS, where the first position is a start position of the time domain unit where the WUS is located.

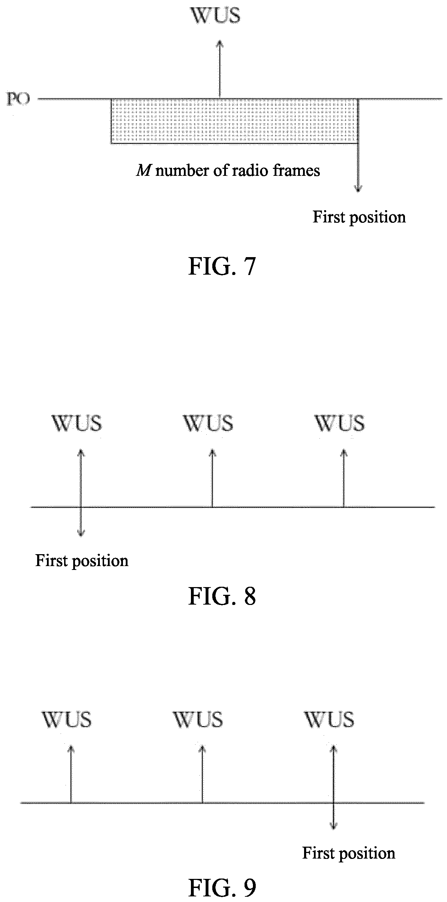

In an embodiment, as shown in FIG. 7, assuming that a time domain unit where the WUS is located is $M$ number of radio frames, the UE detects the WUS sent by the base station, and determines a corresponding first PO at least according to a first position and a first offset corresponding to the WUS, where the first position is an end position of the time domain unit where the WUS is located.

In an embodiment, as shown in FIG. 8, assuming that the WUS corresponds to three WUSs, the UE detects the WUS sent by the base station, and determines a corresponding first PO at least according to a first position and a first offset corresponding to the WUS, where the first position is the first WUS of the three WUSs.

In an embodiment, as shown in FIG. 9, assuming that the WUS corresponds to three WUSs, the UE detects the WUS sent by the base station, and determines a corresponding first PO at least according to a first position and a first offset corresponding to the WUS, where the first position is the last WUS of the three WUSs.

Those having ordinary skills in the art can understand that the first position may also be a time domain resource position where the WUS carrying synchronization information is located, or a time domain resource position where the WUS for measurement is located.

The following embodiments describe the process of forming the target PO set in greater details.

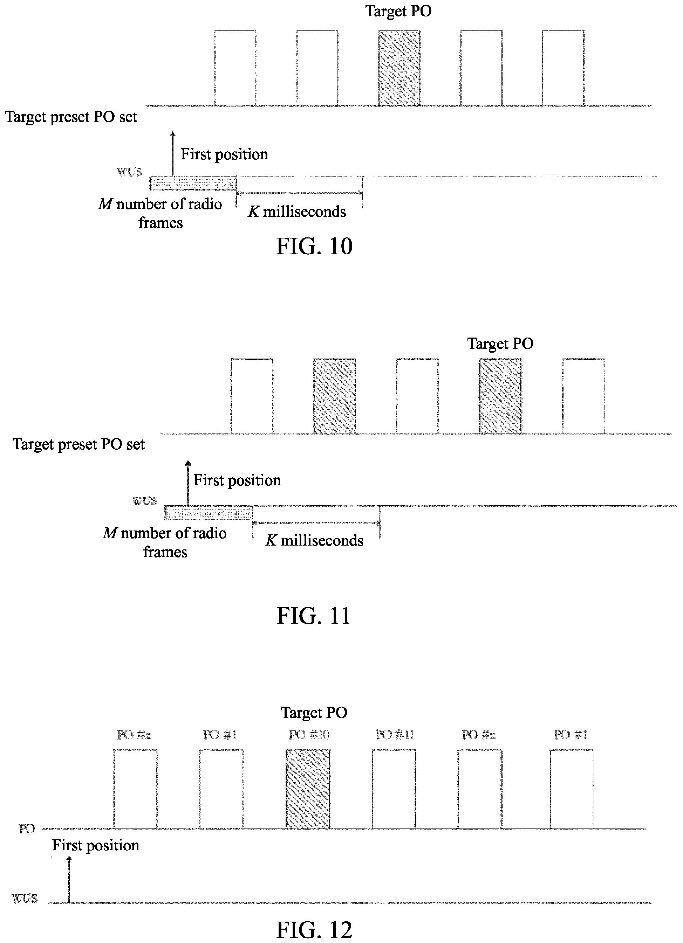

In an embodiment, the UE detects the WUS sent by the base station, determines that the first PO in the target PO set after the first position corresponding to the WUS plus the first offset is the corresponding target PO, and detects the PDCCH at the target PO. As shown in FIG. 10, assuming that the first position is an end position of the time domain unit where the WUS is located, the time domain unit includes $M$ number of radio frames, and the first offset is $k$ milliseconds, the UE determines the target preset PO set according to preset parameters including a DRX cycle $T$ and parameters $N$ and $Ns$ configured by higher-layer signaling. In this embodiment, the target PO set is the target preset PO set. The specific process of determining the target preset PO set is as follows: the UE determines a PF according to $T$ and $N$, and determines the number of POs in the PF according to $Ns$, where $T$, $N$, and $Ns$ are dedicated cell-based preset parameters configured by the base station for a LP-WUS UE, or $T$, $N$, and $Ns$ are common cell-based preset parameters configured by the base station for a legacy UE.

In an embodiment, the UE detects the WUS sent by the base station, determines that the first PO in the target PO set after the first position corresponding to the WUS with the first offset is the corresponding target PO, and detects the PDCCH at the target PO. As shown in FIG. 11, assuming that the first position is an end position of the time domain unit where the WUS is located, the time domain unit includes *M* number of radio frames, and the first offset is k milliseconds, the UE determines the target preset PO set according to preset parameters including a DRX cycle *T* and parameters *N* and *Ns* configured by higher-layer signaling, where the target PO set includes the first *M2*=1 POs among every *M1*=2 POs in the target preset PO set, and *T, N,* and *Ns* are dedicated terminal device-based preset parameters configured by the base station for a LP-WUS UE.

In an embodiment, the UE detects the WUS sent by the base station, determines that the first PO in the target PO set after the first position corresponding to the WUS with the first offset is the corresponding target PO, and detects the PDCCH at the target PO. Assuming that the first position is an end position of the time domain unit where the WUS is located, the time domain unit includes *M* number of radio frames, and the first offset is k milliseconds, the UE determines the target preset PO set according to preset parameters including a DRX cycle *T* and parameters *N* and *Ns* configured by higher-layer signaling, divides the target preset PO set into *H1* number of first preset PO subsets, and determines the (h+1) th first preset PO subset as the target PO set. In an example where h = (UE index modulo H1), H1 = 2, and the UE index is 1, the 2nd first preset PO subset is the target PO set of the UE. *h* may also be obtained by other methods.

The following embodiments describe in detail a process of determining the target PO.

In an embodiment, assuming that the first offset is *k* milliseconds, the UE detects the WUS sent by the base station, determines that the first OFDM symbol after the first position corresponding to the WUS plus k milliseconds is a starting symbol of the corresponding target PO, and detects the PDCCH at the target PO.

In an embodiment, assuming that the first offset is k milliseconds, the UE detects the WUS sent by the base station, determines that the first subframe after the first position corresponding to the WUS plus k milliseconds is the subframe where the corresponding target PO is located, and detects the PDCCH at the target PO.

In an embodiment, assuming that the first offset is k milliseconds, the UE detects the WUS sent by the base station, determines that the first subframe after the first position corresponding to the WUS plus k milliseconds is the subframe where the corresponding target PO is located, and detects the PDCCH at the target PO.

In an embodiment, assuming that the first offset is k milliseconds, the UE detects the WUS sent by the base station, determines that the first slot after the first position corresponding to the WUS plus *k* milliseconds is the slot where the corresponding target PO is located, and detects the PDCCH at the target PO.

In an embodiment, assuming that the first offset is *k* milliseconds, the UE detects the WUS sent by the base station, determines that the first radio frame after the first position corresponding to the WUS plus *k* milliseconds is the radio frame where the corresponding target PO is located, and detects the PDCCH at the target PO.

In an embodiment, assuming that the first offset is *m* subframes, the UE detects the WUS sent by the base station, determines that the first OFDM symbol after the first position corresponding to the WUS plus m subframes is a starting symbol of the corresponding target PO, and detects the PDCCH at the target PO.

In an embodiment, assuming that the first offset is *m* number of subframes, the UE detects the WUS sent by the base station, determines that the first subframe after the first position corresponding to the WUS plus *m* number of subframes is the subframe where the corresponding target PO is located, and detects the PDCCH at the target PO.

In an embodiment, assuming that the first offset is *m* number of subframes, the UE detects the WUS sent by the base station, determines that the first radio frame after the first position corresponding to the WUS plus m number of subframes is the radio frame where the corresponding target PO is located, and detects the PDCCH at the target PO.

In an embodiment, assuming that the first offset is m number of subframes, the UE detects the WUS sent by the base station, determines that the first slot after the first position corresponding to the WUS plus *m* number of subframes is the slot where the corresponding target PO is located, and detects the PDCCH at the target PO.

In an embodiment, assuming that the first offset is *n* number of radio frames, the UE detects the WUS sent by the base station, determines that the first OFDM symbol after the first position corresponding to the WUS plus *n* number of radio frames is a starting symbol of the corresponding target PO, and detects the PDCCH at the target PO.

In an embodiment, assuming that the first offset is *n* number of radio frames, the UE detects the WUS sent by the base station, determines that the first subframe after the first position corresponding to the WUS plus *n* number of radio frames is the subframe where the corresponding target PO is located, and detects the PDCCH at the target PO.

In an embodiment, assuming that the first offset is *n* radio frames, the UE detects the WUS sent by the base station, determines that the first slot after the first position corresponding to the WUS plus *n* number of radio frames is the slot where the corresponding target PO is located, and detects the PDCCH at the target PO.

In an embodiment, assuming that the first offset is n number of radio frames, the UE detects the WUS sent by the base station, determines that the first radio frame after the first position corresponding to the WUS plus *n* number of radio frames is the radio frame where the corresponding target PO is located, and detects the PDCCH at the target PO.

In an embodiment, assuming that the first offset is *h* number of OFDM symbols, the UE detects the WUS sent by the base station, determines that the first OFDM symbol after the first position corresponding to the WUS plus *h* number of OFDM symbols is a starting symbol of the corresponding target PO, and detects the PDCCH at the target PO.

In an embodiment, assuming that the first offset is $h$ number of OFDM symbols, the UE detects the WUS sent by the base station, determines that the first subframe after the first position corresponding to the WUS plus $h$ number of OFDM symbols is the subframe where the corresponding target PO is located, and detects the PDCCH at the target PO.

In an embodiment, assuming that the first offset is $h$ number of OFDM symbols, the UE detects the WUS sent by the base station, determines that the first slot after the first position corresponding to the WUS plus $h$ number of OFDM symbols is the slot where the corresponding target PO is located, and detects the PDCCH at the target PO.

In an embodiment, assuming that the first offset is $h$ number of OFDM symbols, the UE detects the WUS sent by the base station, determines that the first radio frame after the first position corresponding to the WUS plus $h$ number of OFDM symbols is the radio frame where the corresponding target PO is located, and detects the PDCCH at the target PO.

In an embodiment, assuming that the first offset is b number of slots, the UE detects the WUS sent by the base station, determines that the first OFDM symbol after the first position corresponding to the WUS plus $b$ number of slots is a starting symbol of the corresponding target PO, and detects the PDCCH at the target PO.

In an embodiment, assuming that the first offset is $b$ number of slots, the UE detects the WUS sent by the base station, determines that the first subframe after the first position corresponding to the WUS plus $b$ number of slots is the subframe where the corresponding target PO is located, and detects the PDCCH at the target PO.

In an embodiment, assuming that the first offset is $b$ number of slots, the UE detects the WUS sent by the base station, determines that the first slot after the first position corresponding to the WUS plus $b$ number of slots is the slot where the corresponding target PO is located, and detects the PDCCH at the target PO.

In an embodiment, assuming that the first offset is $b$ number of slots, the UE detects the WUS sent by the base station, determines that the first radio frame after the first position corresponding to the WUS plus $b$ number of slots is the radio frame where the corresponding target PO is located, and detects the PDCCH at the target PO.

In an embodiment, assuming that the first sub-offset is x number of radio frames and the second sub-offset is g number of radio frames, the UE detects the WUS sent by the base station, determines that the first OFDM symbol after the first position corresponding to the WUS plus $x+g$ number of radio frames is a starting symbol of the corresponding target PO, and detects the PDCCH at the target PO.

In an embodiment, assuming that the first sub-offset is x number of radio frames and the second sub-offset is g number of radio frames, the UE detects the WUS sent by the base station, determines that the first subframe after the first position corresponding to the WUS plus $x+g$ number of radio frames is the subframe where the corresponding target PO is located, and detects the PDCCH at the target PO.

In an embodiment, assuming that the first sub-offset is x number of radio frames and the second sub-offset is g number of radio frames, the UE detects the WUS sent by the base station, determines that the first slot after the first position corresponding to the WUS plus $x+g$ number of radio frames is the slot where the corresponding target PO is located, and detects the PDCCH at the target PO.

In an embodiment, assuming that the first sub-offset is $x$ number of radio frames and the second sub-offset is g number of radio frames, the UE detects the WUS sent by the base station, determines that the first radio frame after the first position corresponding to the WUS plus $x+g$ number of radio frames is the radio frame where the corresponding target PO is located, and detects the PDCCH at the target PO.

In an embodiment, assuming that the first sub-offset is $x$ radio frames and the second sub-offset is $d$ number of POs, the UE detects the WUS sent by the base station, determines that the $d^{th}$ preset PO after the first position corresponding to the WUS plus $x$ number of radio frames is the corresponding target PO, and detects the PDCCH at the target PO.

The following embodiments describe in detail the process of the UE determining the target PO in the target PO set according to the PO index information carried in the WUS sent by the base station.

FIG. 12 is a schematic diagram of determining the target PO according to PO index information.

As shown in FIG. 12, it is assumed that a correspondence between PO indexes and preset POs is based on $H$ number of radio frames, i.e., a PO index of the first preset PO in the $H$ number of radio frames is 1, a PO index of the second preset PO is 2, ..., and a PO index of the $z^{th}$ preset PO is z. The target PO is a PO in the target preset PO set. The UE determines the target preset PO set according to a cell-based DRX cycle $T$ and parameters $N$ and $Ns$ configured by higher-layer signaling, where the target preset PO set is the target PO set. The UE detects, at the first position, a WUS sent by the base station, where a PO index carried by the WUS is 10. In this case, the UE determines that the PO with the PO index of 10 is the corresponding target PO, and detects the corresponding PDCCH at the target PO.

It should be noted that there are various methods for determining the target PO set according to the target preset PO set. In addition to the method for determining the target PO set in the embodiment corresponding to FIG. 12, methods set forth in the following embodiments may also be used.

In an embodiment, the target PO set is a set including each $M2$ number of POs out of every $M1$ number of POs in the target preset PO set, where $M1$ and $M2$ are positive integers.

In an embodiment, the target PO set is a set including POs in each $K2$ number of radio frames out of every $K1$

number of radio frames in the target preset PO set, where *K1* and *K2* are positive integers.

In an embodiment, the target PO set is a subset of the target preset PO set.

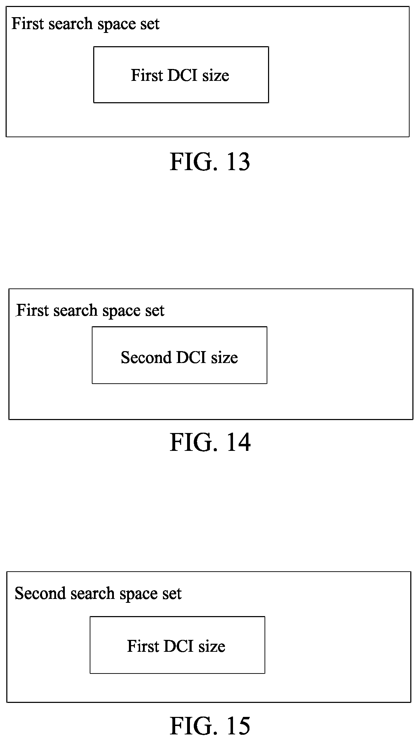

The process of detecting the corresponding PDCCH at the target PO in a number of for PO determination according to an embodiment of the present disclosure is described in detail through embodiments corresponding to FIG. 13 to FIG. 15.

In an embodiment, the UE receives the WUS sent by the base station, determines the target PO corresponding to the WUS, and detects the PDCCH on the target PO. As shown in FIG. 13, the UE detects the PDCCH scrambled by a first RNTI in a first search space set, where a size of DCI carried in the PDCCH is a first DCI size. The first RNTI is a predefined value or is determined by configured signaling, and has a value range of FFF3 to FFFD. The first search space set is a search space set corresponding to a legacy PO, i.e., the first search space set is a common search space set.

In an embodiment, the UE receives the WUS sent by the base station, determines the target PO corresponding to the WUS, and detects the PDCCH on the target PO. The UE detects the PDCCH scrambled by a P-RNTI in a first search space set, where a size of DCI carried in the PDCCH is a second DCI size. The first search space set is a search space set corresponding to a legacy PO.

In an embodiment, the UE receives the WUS sent by the base station, determines the target PO corresponding to the WUS, and detects the PDCCH on the target PO. The UE detects the PDCCH scrambled by a P-RNTI in a second search space set, where a size of DCI carried in the PDCCH is a first DCI size. The second search space set is a search space set dedicated to the PDCCH corresponding to the target PO.

In the above embodiments, the first DCI size is different from the second DCI size, and the second DCI size is different from the size of DCI carrying a paging indication. The first DCI format is DCI format 1-0 or DCI format 2-7.

In an embodiment, the UE detects the WUS sent by the base station, determines the target PO corresponding to the WUS, and detects the PDCCH on the target PO. A frequency range of the PDCCH is a first BWP, which is a BWP configured for the target PO.

In an embodiment, when a third RNTI is not configured in the base station, a legacy PO is determined as the target PO, where the third RNTI is an RNTI dedicated to the PDCCH corresponding to the target PO.

In an embodiment, when a second search space set is not configured in the base station, a legacy PO is determined as the target PO, where the second search space set is a search space set dedicated to the PDCCH corresponding to the target PO.

In an embodiment, when a BWP configured by the base station does not include a first BWP, a legacy PO is determined as the target PO, where the first BWP is a dedicated BWP carrying the PDCCH corresponding to the target PO.

In an embodiment, when a first DCI format and/or a first DCI size is not configured by the base station, a legacy PO is determined as the target PO, where the first DCI format is a format dedicated to the PDCCH corresponding to the target PO, and the first DCI size is a size dedicated to the PDCCH corresponding to the target PO.

In an embodiment, when signaling indicates that a legacy PO is the target PO, the legacy PO is determined as the target PO.

In the above embodiments, when the legacy PO is determined as the target PO, the UE detects the PO according to a legacy PO detection method.

In an embodiment, the UE starts detection of legacy paging *F* milliseconds after detecting that the WUS carries system message change indication information. That the UE starts detection of legacy paging means that the UE detects the PO according to the legacy PO detection method.

In an embodiment, the UE starts detection of legacy paging *J* milliseconds after detecting that the PDCCH corresponding to the target PO carries system message change indication information. That the UE starts detection of legacy paging means that the UE detects the PO according to the legacy PO detection method.

In the above embodiments, that the UE detects the PO according to the legacy PO detection method includes one of: the UE does not determine according to the result of the WUS detection whether to perform PO detection, or the UE directly detects the PDCCH on the legacy PO.

According to a second aspect of the present disclosure, a method for determining a PO is provided in an embodiment. The method is applied to a base station (BS), and includes, sending, by the base stations a WUS to a UE, determining, by the BS, a target PO according to at least the WUS, and sending by the BS, a PDCCH at the target PO.

In an embodiment, the base station determines the target PO according to first position information and first offset information corresponding to the WUS.

In an embodiment, the base station determines the target PO according to PO index information carried in the WUS.

In an embodiment, the base station obtains a target preset PO set according to a preset configuration parameter; and determines a target PO set according to the target preset PO set, The preset configuration parameter includes at least one of: a DRX cycle, a number of PFs in a DRX cycle, a number of POs in a PF, a PO-specific cycle, a PO-specific offset, or a number of POs.

In an embodiment, the preset configuration parameter may be one of: a public cell-based configuration parameter configured by signaling, a dedicated cell-based configuration parameter configured by signaling, a default preset parameter broadcast through system information, a public UE-based configuration parameter configured by signaling, or a dedicated UE-based configuration parameter configured by signaling.

In an embodiment, the target PO set is all or part of POs in the target preset PO set.

In an embodiment, the target PO set is a set including each $M2$ number of POs out of every $M1$ number of POs in the target preset PO set, where $M1$ and $M2$ are positive integers.

In an embodiment, the target PO set is a set including POs in each $K2$ number of radio frames out of every $K1$ number of radio frames in the target preset PO set, where $K1$ and $K2$ are positive integers.

In an embodiment, the target PO set is a subset of the target preset PO set.

In an embodiment, the base station determines at least one PO in the target PO set as the target PO according to the first position information and the first offset information.

In an embodiment, the base station determines a start position of the target PO according to the first position information and the first offset information, where the start position is one of a starting symbol of the target PO, a starting slot of the target PO, or a radio frame in which the target PO is located.

In an embodiment, the base station determines in the target PO set at least one PO closest to a second position as the target PO, where the second position is obtained according to the first position information and the first offset information.

In an embodiment, the base station determines $L$ number of POs in the target PO set as the target POs, where a value of $L$ is determined according to configuration signaling.

In an embodiment, the base station determines at least one PO in the target PO set as the target PO according to the PO index information.

It can be understood that the first position information includes at least one of: a start position of a time domain unit where the WUS is located, an end position of a time domain unit where the WUS is located, a position of a first WUS among a plurality of WUSs corresponding to the WUS, a position of a last WUS among a plurality of WUSs corresponding to the WUS, a time domain resource position where the WUS carrying synchronization information is located, or a time domain resource position where the WUS for measurement is located. The time domain unit includes $H$ number of OFDM symbols, $K$ number of slots, or $M$ number of radio frames, where $H, K,$ and $M$ are positive integers.

It can be understood that the first offset information includes at least one of: $k$ milliseconds, $m$ number of subframes, $b$ number of slots, $n$ number of radio frames, $h$ number of OFDM symbols, and $d$ number of POs, where $k, m, b, n, h,$ and $d$ are integers greater than or equal to 0.

In an embodiment, the first offset information includes first sub-offset information and second sub-offset information. The first sub-offset information or the second sub-offset includes at least one of: $k1$ milliseconds, $m1$ number of subframes, $b1$ number of slots, $n1$ number of radio frames, $h1$ number of OFDM symbols, and $d1$ number of POs, where $k1, m1, b1, n1, h1,$ and $d1$ are integers greater than or equal to 0.

In an embodiment, the target PO is an occasion at which corresponding first PDCCH is sent.

In an embodiment, the target PO is an occasion at which corresponding last PDCCH is sent.

In an embodiment, the target PO is an occasion at which corresponding PDCCH is sent.

In an embodiment, in a first search space set, the sent PDCCH is scrambled by a first RNTI, where the first RNTI is an RNTI dedicated to the PDCCH corresponding to the target PO. The first search space set is a common search space set.

In an embodiment, in a first search space set, the sent PDCCH is scrambled by a P-RNTI, where a format of DCI carried in the PDCCH is a format dedicated to the PDCCH corresponding to the target PO, and a size of the DCI carried in the PDCCH is a size dedicated to the PDCCH corresponding to the target PO. The first search space set is a common search space set.

In an embodiment, in a second search space set, the sent PDCCH is scrambled by a second P-RNTI, where the second P-RNTI is an RNTI dedicated to the PDCCH corresponding to the target PO, and the second search space set is a search space set dedicated to the PDCCH corresponding to the target PO.

In an embodiment, the sent PDCCH falls within a first BWP, where the first BWP is a dedicated BWP carrying the PDCCH corresponding to the target PO.

In an embodiment, when a first RNTI is not configured, a legacy PO is determined as the target PO, where the first RNTI is an RNTI dedicated to the PDCCH corresponding to the target PO.

In an embodiment, when a second search space set is not configured, a legacy PO is determined as the target PO, where the second search space set is a search space set dedicated to the PDCCH corresponding to the target PO.

In an embodiment, when a configured BWP does not include a first BWP, a legacy PO is determined as the target PO, where the first BWP is a dedicated BWP carrying the PDCCH corresponding to the target PO.

In an embodiment, when a first DCI format and/or a first DCI size are/is not configured, a legacy PO is determined as the target PO, where the first DCI format is a format dedicated to the PDCCH corresponding to the target PO, and the first DCI size is a size dedicated to the PDCCH corresponding to the target PO.

In an embodiment, when signaling indicates that a legacy PO is the target PO, the legacy PO is determined as the target PO.

In an embodiment, the base station starts sending of legacy paging at a moment that is *F* milliseconds after detecting that the WUS carries system message change indication information, where *F* is a positive integer.

In an embodiment, the base station starts sending of legacy paging at a moment that is *J* milliseconds after detecting that the PDCCH corresponding to the target PO carries system message change indication information, where *J* is a positive integer.

It should be noted that the legacy PO may be calculated using the above equation 1 and equation 2.

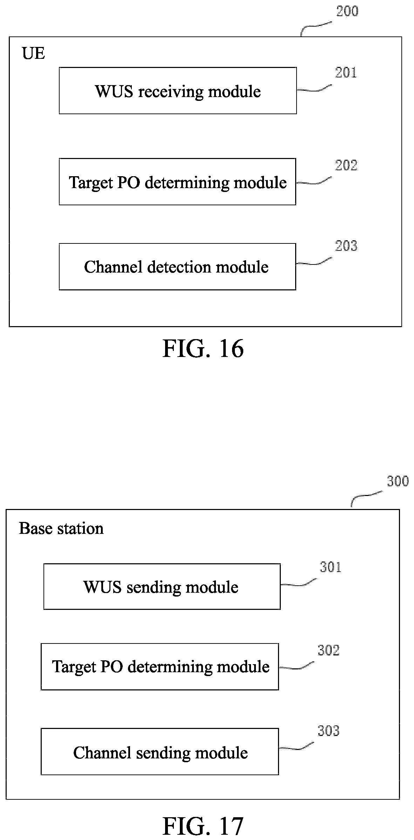

According to an embodiment of the present disclosure, a UE 200 is provided. As shown in FIG. 16, the UE includes: a WUS receiving module 201, configured for receiving a WUS sent by a base station; a target PO determining module 202, configured for determining a target PO according to at least the WUS; and a channel detection module 203, configured for detecting a PDCCH at the target PO.

According to an embodiment of the present disclosure, a base station 300 is provided. As shown in FIG. 17, the base station includes: a WUS sending module 301, configured for sending a WUS to a UE; a target PO determining module 302, configured for determining a target PO according to at least the WUS; and a channel sending module 303, configured for sending a PDCCH at the target PO.

According to an embodiment of the present disclosure, a computer-readable storage medium is provided. The computer-readable storage medium stores a computer-executable instruction which, when executed by a processor, causes the processor to implement the method for determining a PO according to any one of the embodiments of the present disclosure.

According to an embodiment of the present disclosure, a computer program product is provided. The computer program product includes a computer program or a computer instruction stored in a computer-readable storage medium which, when read from the computer-readable storage medium and executed by a processor of a computer device, cause the computer device to implement the method for determining a PO according to any one of the embodiments of the present disclosure.

The system architecture and application scenarios described in the embodiments of the present disclosure are for the purpose of illustrating the technical schemes of the embodiments of the present disclosure more clearly, and do not constitute a limitation on the technical schemes provided in the embodiments of the present disclosure. Those having ordinary skills in the art may know that with the evolution of the system architecture and the emergence of new application scenarios, the technical schemes provided in the embodiments of the present disclosure are also applicable to similar technical problems.

Those having ordinary skills in the art can understand that all or some of the steps in the methods disclosed above and the functional modules/units in the system and the apparatus can be implemented as software, firmware, hardware, and appropriate combinations thereof.

In a hardware implementation, the division of the functional modules/units mentioned in the above description does not necessarily correspond to the division of physical components. For example, one physical component may have multiple functions, or one function or step may be jointly executed by several physical components. Some or all physical components may be implemented as software executed by a processor, such as a central processing unit, a digital signal processor, or a microprocessor, or as hardware, or as an integrated circuit, such as an application-specific integrated circuit. Such software may be distributed on a computer-readable medium, which may include a computer storage medium (or non-transitory medium) and a communication medium (or transitory medium). As is known to those having ordinary skills in the art, the term "computer storage medium" includes volatile and nonvolatile, removable and non-removable media implemented in any method or technology for storage of information (such as computer-readable instructions, data structures, program modules, or other data). The computer storage medium includes, but not limited to, a Random Access Memory (RAM), a Read-Only Memory (ROM), an Electrically Erasable Programmable Read-Only Memory (EEPROM), a flash memory or other memory technology, a Compact Disc Read-Only Memory (CD-ROM), a Digital Versatile Disc (DVD) or other optical storage, a cassette, a magnetic tape, a magnetic disk storage or other magnetic storage device, or any other medium which can be used to store the desired information and can be accessed by a computer. In addition, as is known to those having ordinary skills in the art, the communication medium typically includes computer-readable instructions, data structures, program modules, or other data in a modulated data signal such as a carrier or other transport mechanism, and can include any information delivery medium.

As used in this description, the terms "component," "module," "system," and the like are used to denote computer-related entities, hardware, firmware, a combination of hardware and software, software, or software in execution. For example, a component may be, but not limited to, a process running on a processor, a processor, an object, an executable file, a thread of execution, a program, or a computer. An application running on a computing device and the computing device may both be illustrated as components. One or more components may reside in a process or thread of execution. A component may be located on one computer or distributed on two or more computers. In addition, the components may be executed from various computer-readable media having various data structures stored therein.

The components may communicate via local and/or remote processes such as in accordance with a signal having one or more data packets (e.g., data from one component interacting with another component in a local system, distributed system, and/or across a network such as the Internet with other systems via the signal).

Although some embodiments of the present disclosure are described above with reference to the accompanying drawings, these embodiments are not intended to limit the protection scope of the present disclosure. Any modifications, equivalent replacements and improvements made by those having ordinary skills in the art without departing from the scope and essence of the present disclosure shall fall within the protection scope of the present disclosure.

**Claims**

1. A method for determining a Paging Occasion (PO), comprising:

   receiving a Wake Up Signal (WUS) sent by a base station;
   determining a target PO according to at least the WUS; and
   detecting a Physical downlink Control Channel (PDCCH) at the target PO.

2. The method of claim 1, wherein determining the target PO according to at least the WUS comprises at least one of:

   determining the target PO according to first position information and first offset information corresponding to the WUS; or
   determining the target PO according to PO index information carried by the WUS.

3. The method of claim 2, further comprising:

   obtaining a target preset PO set according to a preset configuration parameter; and
   determining a target PO set according to the target preset PO set,
   wherein the preset configuration parameter comprises at least one of: a Discontinuous Reception (DRX) cycle, a number of Paging Frames (PFs) in a DRX cycle, a number of POs in a PF, a PO-specific cycle, a PO-specific offset, or a number of POs.

4. The method of claim 3, wherein the preset configuration parameter is one of: a public cell-based configuration parameter configured by signaling, a dedicated cell-based configuration parameter configured by signaling, a default preset parameter broadcast through system information, a public User Equipment (UE)-based configuration parameter configured by signaling, or a dedicated UE-based configuration parameter configured by signaling.

5. The method of claim 3, wherein the target PO set comprises at least one of:

   all or part of POs in the target preset PO set;
   a set comprising each $M2$ number of POs out of every $M1$ number POs in the target preset PO set;
   a set comprising POs in each $K2$ number of radio frames out of every $K1$ number of radio frames in the target preset PO set; or
   a subset of the target preset PO set,
   wherein $M1, M2, K1,$ and $K2$ are positive integers.

6. The method of claim 3, wherein determining the target PO according to first position information and first offset information corresponding to the WUS comprises at least one of:

   determining at least one PO in the target PO set as the target PO according to the first position information and the first offset information; or
   determining a start position of the target PO according to the first position information and the first offset information, wherein the start position is one of, a starting symbol of the target PO, a starting slot of the target PO, or a radio frame in which the target PO is located.

7. The method of claim 6, wherein determining at least one PO in the target PO set as the target PO according to the first position information and the first offset information comprises at least one of:

   determining at least one PO closest to a second position in the target PO set as the target PO, wherein the second position is obtained according to the first position information and the first offset information; and

determining *L* number of POs in the target PO set as a plurality of target POs, wherein a value of *L* is determined according to configuration signaling, and the target PO is one of the plurality of target POs.

8. The method of claim 2, wherein determining the target PO according to the PO index information carried by the WUS comprises:
   determining at least one PO in the target PO set as the target PO according to the PO index information.

9. The method of claim 2, wherein the first position information comprises at least one of:

   a start position of a time domain unit where the WUS is located, an end position of a time domain unit where the WUS is located, a position of a first WUS among a plurality of WUSs corresponding to the WUS, a position of a last WUS among a plurality of WUSs corresponding to the WUS, a time domain resource position where the WUS carrying synchronization information is located, or a time domain resource position where the WUS which is intended for measurement is located; and
   the time domain unit comprises *H* number of Orthogonal Frequency Division Multiplexing (OFDM) symbols, *K* number of slots, and *M* number of radio frames, wherein *H, K,* and *M* are positive integers.

10. The method of claim 2, wherein the first offset information comprises at least one of:
    *k* milliseconds, *m* number of subframes, *b* number of slots, *n* number of radio frames, *h* number of OFDM symbols, and *d* number of POs, wherein *k, m, b, n, h, d* are integers greater than or equal to 0.

11. The method of claim 2, wherein the first offset information comprises first sub-offset information and second sub-offset information, and the first sub-offset information or the second sub-offset comprises at least one of:
    *k1* milliseconds, *m1* number of subframes, *b1* number of slots, *n1* number of radio frames, *h1* number of OFDM symbols, or *d1* number of POs, wherein *k1, m1, b1, n1, h1,* and *d1* are integers greater than or equal to 0.

12. The method of claim 1, wherein the determined target PO is correspondingly at least one of:
    a first PDCCH Monitor Occasion (MO), a last PDCCH MO, or a PDCCH MO.

13. The method of claim 1, wherein detecting the PDCCH at the target PO comprises:

    detecting, in a first search space set, the PDCCH that is scrambled by a first Radio Network Temporary Identifier (RNTI),
    wherein the first RNTI is an RNTI dedicated to the PDCCH corresponding to the target PO, and the first search space set is a common search space set.

14. The method of claim 1, wherein detecting the PDCCH at the target PO comprises:

    detecting, in a first search space set, the PDCCH that is scrambled by a Paging Radio Network Temporary Identifier (P-RNTI),
    wherein a format of Downlink Control Information (DCI) carried in the PDCCH is a format dedicated to the PDCCH corresponding to the target PO, and a size of the DCI carried in the PDCCH is a size dedicated to the PDCCH corresponding to the target PO; and the first search space set is a common search space set.

15. The method of claim 1, wherein detecting the PDCCH at the target PO comprises:

    detecting, in a second search space set, the PDCCH that is scrambled by a second P-RNTI,
    wherein the second P-RNTI is an RNTI dedicated to the PDCCH corresponding to the target PO, and the second search space set is a search space set dedicated to the PDCCH corresponding to the target PO.

16. The method of claim 1, wherein detecting the PDCCH at the target PO comprises:

    detecting the PDCCH falling within a frequency domain range of a first Bandwidth Part (BWP),
    wherein the first BWP is a dedicated BWP carrying the PDCCH corresponding to the target PO.

17. The method of claim 1, wherein before determining the target PO according to the at least WUS, the method further comprises at least one of:

in response to an absence of configuration for a third RNTI by the base station, determining a legacy PO as the target PO, wherein the third RNTI is an RNTI dedicated to the PDCCH corresponding to the target PO;

in response to an absence of configuration for a second search space set by the base station, determining the legacy PO as the target PO, wherein the second search space set is a search space set dedicated to the PDCCH corresponding to the target PO;

in response to an exclusion of a first BWP from BWP configured by the base station, determining the legacy PO as the target PO, wherein the first BWP is a dedicated BWP carrying the PDCCH corresponding to the target PO;

in response to an absence of configuration for first DCI format and/or a first DCI size by the base station, determining the legacy PO as the target PO, wherein the first DCI format is a format dedicated to the PDCCH corresponding to the target PO, and the first DCI size is a size dedicated to the PDCCH corresponding to the target PO; and

in response to signaling indicating that the legacy PO is the target PO, determining the legacy PO as the target PO.

18. The method of claim 1, further comprising one of:

starting detection of legacy paging at a moment that is $F$ milliseconds after detecting that the WUS carries system message change indication information; or

starting detection of legacy paging at a moment that is $J$ milliseconds after detecting that the PDCCH corresponding to the target PO carries system message change indication information,

wherein $F$ and $J$ are positive integers.

19. A method for determining a Paging Occasion (PO) , comprising:

sending a Wake Up Signal (WUS);

determining a target PO according to at least the WUS; and

sending a Physical Downlink Control Channel (PDCCH) at the target PO.

20. The method of claim 19, wherein determining the target PO according to at least the WUS comprises at least one of:

determining the target PO according to first position information and first offset information corresponding to the WUS; or

determining the target PO according to PO index information carried by the WUS.

21. The method of claim 20, further comprising:

obtaining a target preset PO set according to a preset configuration parameter; and

determining a target PO set according to the target preset PO set,

wherein the preset configuration parameter comprises at least one of: a Discontinuous Reception (DRX) cycle, a number of Paging Frames (PFs) in a DRX cycle, a number of POs in a PF, a PO-specific cycle, a PO-specific offset, and a number of POs.

22. The method of claim 21, wherein the preset configuration parameter is one of: a public cell-based configuration parameter configured by signaling, a dedicated cell-based configuration parameter configured by signaling, a default preset parameter broadcast through system information, a public User Equipment (UE)-based configuration parameter configured by signaling, or a dedicated UE-based configuration parameter configured by signaling.

23. The method of claim 21, wherein the target PO set comprises at least one of:

all or part of POs in the target preset PO set;

a set comprising each $M2$ number of POs out of every $M1$ number of POs in the target preset PO set;

a set comprising POs in each $K2$ number of radio frames out of every $K1$ number of radio frames in the target preset PO set; and

a subset of the target preset PO set,

wherein $M1, M2, K1,$ and $K2$ are positive integers.

24. The method of claim 21, wherein determining the target PO according to first position information and first offset information corresponding to the WUS comprises at least one of:

determining at least one PO in the target PO set as the target PO according to the first position information and the first offset information; and

determining a start position of the target PO according to the first position information and the first offset information, wherein the start position is one of, a starting symbol of the target PO, a starting slot of the target PO, or a radio frame in which the target PO is located.

25. The method of claim 24, wherein determining at least one PO in the target PO set as the target PO according to the first position information and the first offset information comprises at least one of:

determining at least one PO closest to a second position in the target PO set as the target PO, wherein the second position is obtained according to the first position information and the first offset information; and

determining L number of POs in the target PO set as a plurality of target POs, and the target PO is one of the plurality of target POs,

wherein a value of $L$ is determined according to configuration signaling.

26. The method of claim 20, wherein determining the target PO according to PO index information carried by the WUS comprises:

determining at least one PO in the target PO set as the target PO according to the PO index information.

27. The method of claim 21, wherein the first position information comprises at least one of:

a start position of a time domain unit where the WUS is located, an end position of a time domain unit where the WUS is located, a position of a first WUS among a plurality of WUSs corresponding to the WUS, a position of a last WUS among a plurality of WUSs corresponding to the WUS, a time domain resource position where the WUS carrying synchronization information is located, and a time domain resource position where the WUS which is intended for measurement is located; and

the time domain unit comprises $H$ number of Orthogonal Frequency Division Multiplexing (OFDM) symbols, $K$ number of slots, or $M$ number of radio frames, wherein $H, K,$ and $M$ are positive integers.

28. The method of claim 20, wherein the first offset information comprises at least one of:
$k$ milliseconds, $m$ number of subframes, $b$ number of slots, $n$ number of radio frames, $h$ number of OFDM symbols, or $d$ number of POs, wherein $k, m, b, n, h, d$ are integers greater than or equal to 0.

29. The method of claim 20, wherein the first offset information comprises first sub-offset information and second sub-offset information, and the first sub-offset information or the second sub-offset comprises at least one of:
$k1$ milliseconds, $m1$ number of subframes, $b1$ number of slots, $n1$ number of radio frames, $h1$ number of OFDM symbols, or $d1$ number of POs, wherein $k1, m1, b1, n1, h1,$ and $d1$ are integers greater than or equal to 0.

30. The method of claim 19, wherein the target PO is correspondingly at least one of:
a first PDCCH sending occasion, a last PDCCH sending occasion, or a PDCCH sending occasion.

31. The method of claim 19, wherein sending the PDCCH at the target PO comprises:

scrambling, in a first search space set, the PDCCH that is sent subsequently by a first Radio Network Temporary Identifier (RNTI),

wherein the first RNTI is a dedicated RNTI of the PDCCH corresponding to the target PO, and the first search space set is a common search space set.

32. The method of claim 19, wherein sending the PDCCH at the target PO comprises:

scrambling, in a first search space set, the PDCCH that is sent subsequently by a Paging Radio Network Temporary Identifier (P-RNTI),

wherein a format of Downlink Control Information (DCI) carried in the PDCCH is a format dedicated to the PDCCH corresponding to the target PO, and a size of the DCI carried in the PDCCH is a size dedicated to the PDCCH corresponding to the target PO; and the first search space set is a common search space set.

33. The method of claim 19, wherein sending the PDCCH at the target PO comprises:

scrambling, in a second search space set, the PDCCH that is sent subsequently by a second P-RNTI, wherein the second P-RNTI is an RNTI dedicated to the PDCCH corresponding to the target PO, and the second search space set is a search space set dedicated to the PDCCH corresponding to the target PO.

34. The method of claim 19, wherein sending the PDCCH at the target PO comprises:

falling, by the PDCCH that is sent subsequently, within a first Bandwidth Part (BWP),
wherein the first BWP is a dedicated BWP carrying the PDCCH corresponding to the target PO.

35. The method of claim 19, wherein before determining the target PO according to at least the WUS, the method further comprises at least one of:

in response to an absence of configuration for a third RNTI by the base station, determining a legacy PO as the target PO, wherein the third RNTI is an RNTI dedicated to the PDCCH corresponding to the target PO;
in response to an absence of configuration for a second search space set by the base station, determining the legacy PO as the target PO, wherein the second search space set is a search space set dedicated to the PDCCH corresponding to the target PO;
in response to an exclusion of a first BWP from BWP configured by the base station, determining the legacy PO as the target PO, wherein the first BWP is a dedicated BWP carrying the PDCCH corresponding to the target PO;
in response to an absence of configuration for first DCI format and/or a first DCI size by the base station, determining the legacy PO as the target PO, wherein the first DCI format is a format dedicated to the PDCCH corresponding to the target PO, and the first DCI size is a size dedicated to the PDCCH corresponding to the target PO; or
in response to signaling indicating that the legacy PO is the target PO, determining the legacy PO as the target PO.

36. The method of claim 19, further comprising one of:

starting sending of legacy paging at a moment that is F milliseconds after detecting that the WUS carries system message change indication information; or
starting sending of legacy paging at a moment that is J milliseconds after detecting that the PDCCH corresponding to the target PO carries system message change indication information,
wherein F and *J* are positive integers.

37. A terminal device, comprising:

a Wake Up Signal (WUS) receiving module, configured for receiving a WUS sent by a base station;
a target PO determining module, configured for determining a target Paging Occasion (PO) at least according to the WUS; and
a channel detection module, configured for detecting a Physical Downlink Control Channel (PDCCH) at the target PO.

38. A base station, comprising:

a Wake Up Signal (WUS) sending module, configured for sending a WUS to a terminal device;
a target PO determining module, configured for determining a target Paging Occasion (PO) at least according to the WUS; and
a channel sending module, configured for sending a Physical Downlink Control Channel (PDCCH) at the target PO.

39. A computer-readable storage medium, storing a computer-executable instruction which, when executed by a processor, causes the processor to perform the method of any one of claims 1 to 36.

40. A computer program product, comprising a computer program or a computer instruction stored in a computer-readable storage medium which, when read from the computer-readable storage medium and executed by a processor of a computer device, causes the computer device to perform the method of any one of claims 1 to 36.

FIG. 1

FIG. 2

S1000

A UE receives a WUS sent by a base station

S2000

The UE determines a target PO according to at least the WUS

S3000

The UE detects a PDCCH at the target PO

FIG. 3

S4100

Obtain a target preset PO set according to a preset configuration parameter

S4200

Determine a target PO set according to the target preset PO set

FIG. 4

First PO

PO _____

First position

WUS _____

First offset

## FIG. 5

WUS

PO _____

*M* number of radio frames

First position

## FIG. 6

FIG. 7

FIG. 8

FIG. 9

Target PO

Target preset PO set

First position

WUS

M number of radio frames

K milliseconds

FIG. 10

Target PO

Target preset PO set

First position

WUS

M number of radio frames

K milliseconds

FIG. 11

Target PO

PO #z    PO #1    PO #10    PO #11    PO #z    PO #1

PO

First position

WUS

FIG. 12

First search space set

First DCI size

FIG. 13

First search space set

Second DCI size

FIG. 14

Second search space set

First DCI size

FIG. 15

200

UE

WUS receiving module — 201

Target PO determining module — 202

Channel detection module — 203

FIG. 16

300

Base station

WUS sending module — 301

Target PO determining module — 302

Channel sending module — 303

FIG. 17

<p style="text-align:center">**INTERNATIONAL SEARCH REPORT**</p>

| | |
|---|---|
| International application No. | |
| | **PCT/CN2023/071978** |

**A. CLASSIFICATION OF SUBJECT MATTER**

H04W68/00(2009.01)i

According to International Patent Classification (IPC) or to both national classification and IPC

**B. FIELDS SEARCHED**

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNKI, CNTXT, CNABS, VEN, ENTXTC, 3GPP: 寻呼时机, 寻呼机会, 寻呼时刻, PO, 唤醒信号, 叫醒信号, WUS, 寻呼提前指示, PEI, 集合, 组, 子集, 子组, 偏移, 索引, 时延, 效率, paging occasion, wake up signal, paging early indication, set, group, subset, sub group, offset, index, delay, efficiency

**C. DOCUMENTS CONSIDERED TO BE RELEVANT**

| Category* | Citation of document, with indication, where appropriate, of the relevant passages | Relevant to claim No. |
|---|---|---|
| X | WO 2019086674 A1 (SONY MOBILE COMMUNICATIONS INC.; SONY MOBILE COMMUNICATIONS AB) 09 May 2019 (2019-05-09) description, p. 23, line 1 to p. 32, line 31, and figures 14-24 | 1-17, 19-35, 37-40 |
| Y | WO 2019086674 A1 (SONY MOBILE COMMUNICATIONS INC.; SONY MOBILE COMMUNICATIONS AB) 09 May 2019 (2019-05-09) description, p. 23, line 1 to p. 32, line 31, and figures 14-24 | 18,36 |
| Y | WO 2022016467 A1 (APPLE INC.; XU FANGLI) 27 January 2022 (2022-01-27) description, paragraphs 47-78, and figures 4-8 | 18,36 |
| X | CN 111869272 A (APPLE INC.) 30 October 2020 (2020-10-30) description, paragraphs 0153-0155, and figure 4 | 1-2, 9-17, 19-20, 27-35, 37-40 |
| X | WO 2022021023 A1 (GUANGDONG OPPO MOBILE TELECOMMUNICATIONS CORP., LTD.) 03 February 2022 (2022-02-03) description, p. 5, line 3 to p. 9, line 18, and figures 2-4 | 1-2, 8, 19-20, 26, 37-40 |

✓ Further documents are listed in the continuation of Box C.    ✓ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **14 May 2023** | **15 May 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/071978**

### C. DOCUMENTS CONSIDERED TO BE RELEVANT

| Category* | Citation of document, with indication, where appropriate, of the relevant passages | Relevant to claim No. |
|---|---|---|
| A | CN 113170413 A (SHANGHAI NOKIA BELL CO., LTD.; NOKIA SOLUTIONS AND NETWORKS OY) 23 July 2021 (2021-07-23)<br>    entire document | 1-40 |
| A | ZTE, Sanechips. "R1-2106521 Discussion on power saving enhancements for paging"<br>*3GPP tsg_ran\wg1_rl1*, 07 August 2021 (2021-08-07),<br>    entire document | 1-40 |
| A | OPPO. "R1-2109085 Further discussion on Paging enhancements for power saving"<br>*3GPP tsg_ran\wg1_rl1*, 02 October 2021 (2021-10-02),<br>    entire document | 1-40 |
| A | HUAWEI; HISILICON. "R1-1704290 On 'wake-up signal' for paging and connected-mode DRX"<br>*3GPP tsg_ran\WG1_RL1*, No. TSGR1_88b, 25 March 2017 (2017-03-25),<br>    entire document | 1-40 |

Form PCT/ISA/210 (second sheet) (July 2022)

**INTERNATIONAL SEARCH REPORT**
Information on patent family members

International application No.

**PCT/CN2023/071978**

| Patent document cited in search report | | | Publication date (day/month/year) | Patent family member(s) | | | Publication date (day/month/year) |
|---|---|---|---|---|---|---|---|
| WO | 2019086674 | A1 | 09 May 2019 | EP | 3704901 | A1 | 09 September 2020 |
| | | | | EP | 3704901 | B1 | 03 May 2023 |
| | | | | JP | 2021502029 | A | 21 January 2021 |
| | | | | JP | 6979522 | B2 | 15 December 2021 |
| | | | | US | 2020367194 | A1 | 19 November 2020 |
| | | | | US | 11290981 | B2 | 29 March 2022 |
| WO | 2022016467 | A1 | 27 January 2022 | US | 2022303897 | A1 | 22 September 2022 |
| CN | 111869272 | A | 30 October 2020 | US | 2022295403 | A1 | 15 September 2022 |
| | | | | EP | 3665963 | A1 | 17 June 2020 |
| | | | | EP | 3665963 | B1 | 23 February 2022 |
| | | | | US | 2020229095 | A1 | 16 July 2020 |
| | | | | US | 11129104 | B2 | 21 September 2021 |
| | | | | WO | 2019033112 | A1 | 14 February 2019 |
| WO | 2022021023 | A1 | 03 February 2022 | None | | | |
| CN | 113170413 | A | 23 July 2021 | None | | | |

Form PCT/ISA/210 (patent family annex) (July 2022)

**REFERENCES CITED IN THE DESCRIPTION**

**Patent documents cited in the description**

- CN 202210366655